# EUROPEAN PATENT APPLICATION

(11) **EP 4 685 976 A2**
(43) Date of publication of application: **28.01.2026**
(21) Application number: 25223336.6
(22) Date of filing: 17.09.2021
(51) Int. Cl.: H01M 50/463

(54) **SOLID ELECTROLYTE SHEET, AND SOLID ELECTROLYTE SECONDARY BATTERY USING SAID SOLID ELECTROLYTE SHEET**

(30) Priority: 16.03.2021 JP 2021042207
(62) Divisional of application: 21930609.9
(71) Applicant: Vehicle Energy Japan Inc., Hitachinaka-shi, Ibaraki 312-8505 (JP)
(72) Inventor: YAMAMOTO, Yuki, Hitachinaka-shi (JP); YAMAKAWA, Yukio, Ikeda-shi (JP)
(74) Representative: Strehl & Partner mbB

(57) **Abstract**

A solid electrolyte sheet capable of increasing rigidity near an end surface of the solid electrolyte sheet, and a solid electrolyte secondary battery used with the solid electrolyte sheet are provided. A solid electrolyte sheet comprises a plate-shaped base containing a solid electrolyte, a plate-shaped reinforcing portion formed integrally with the outside of the base, wherein the reinforcing portion is a composite member formed by combining two electrically insulating members made of different materials that are formed separately from the base, and which has greater rigidity than the base. Since rigidity near the periphery of the solid electrolyte sheet can be increased, a risk of damage near the periphery of the solid electrolyte sheet can be reduced.

## Description

### Technical field

The present invention relates to a secondary battery used in various industrial equipment, and, to a solid electrolyte sheet which is a battery element, and a solid electrolyte secondary battery using the same.

### Background Art

Electrolyte batteries including positive and negative electrodes capable of absorbing and releasing lithium ions have spread widely as batteries with high energy density for electric vehicles, power storage, and information devices in various fields. For example, in order to use the electrolyte battery for electric vehicle power applications, it is required that an energy density is high, that is, a discharge capacity per unit weight or unit volume is large.

On the other hand, as the discharge capacity per unit weight or unit volume increases, safety becomes an issue, and secondary batteries with even better safety are required, and recently solid-state electrolyte secondary batteries have been developed. The solid electrolyte secondary batteries are secondary batteries that use solid electrolytes instead of conventional organic electrolytes. Since the solid electrolyte secondary batteries do not use organic electrolytes, the secondary batteries are unlikely to cause ignition even if the unit weight or discharge capacity per unit volume increases, and are very safe.

Such solid electrolyte secondary batteries are disclosed in, for example, in Japanese Patent Application Laid-Open No. 2019-057399 (PLT 1). As disclosed in PLT 1, a solid electrolyte secondary battery includes a solid electrolyte sheet containing solid electrolyte particles, and a negative electrode layer is in contact with one surface of the solid electrolyte sheet, and a positive electrode layer is in contact with the other surface. Electric power can be extracted by connecting those positive electrode layer and negative electrode layer to a load.

### Citation List

### Patent Literature

PTL 1: Japanese Patent Application Laid-Open No. 2019-057399

### Summary of Invention

### Technical Problem

By the way, when a solid electrolyte secondary battery is assembled by using the solid electrolyte sheet as described above, or when a mechanical load is applied on the solid electrolyte secondary battery during the use of the solid electrolyte battery, if the rigidity of the solid electrolyte sheet is low, damage may occur in the vicinity of a periphery of the solid electrolyte sheet, and a short circuit may occur between the positive electrode layer and the negative electrode layer. Also, if the rigidity of the solid electrolyte sheet is low, a size of the solid electrolyte sheet is naturally limited, and there is a problem that it is difficult to secure a large ion conduction region.

In any case, if the rigidity of the solid electrolyte sheet is low, there is a problem that it is difficult to secure a large ion conduction region, which may cause a short circuit between the positive electrode layer and the negative electrode layer. Therefore, it is required to increase the rigidity of solid electrolyte sheets.

An object of the present invention is to provide a solid electrolyte sheet capable of increasing the rigidity of the solid electrolyte sheet, and a solid electrolyte secondary battery using the solid electrolyte sheet.

### Solution to Problem

According to the present invention, there is provided a solid electrolyte sheet including a base containing a solid electrolyte and formed in a plate shape, and a plate-shaped reinforcing part formed on an outside of the base, in which the reinforcing part is made of a combination of two electrical insulating members different in material, and larger in rigidity than the base.

### Advantageous Effects of Invention

According to the present invention, since rigidity of the vicinity of the periphery of the solid electrolyte sheet can be increased, a risk of damage in the vicinity of the periphery of the solid electrolyte sheet can be reduced.

Also, since the overall rigidity of the solid electrolyte sheet can be increased, the solid electrolyte sheet can be enlarged and a large ion conduction region can be secured.

### Brief Description of Drawings

Figure 1 is a plan view of a solid electrolyte sheet according to a first embodiment of the present invention.
Figure 2 is a cross-sectional view showing the solid electrolyte sheet taken along a cross-section A-A.
Figures 3 are illustrative views illustrating a method of manufacturing the solid electrolyte sheet according to the first embodiment.
Figure 4 is a plan view of a solid electrolyte sheet according to a first modification of the first embodiment of the present invention.
Figure 5 is a plan view of a solid electrolyte sheet according to a second modification of the first embodiment of the present invention.
Figure 6 is a plan view of a solid electrolyte sheet according to a third modification of the first embodiment of the present invention.
Figure 7 is a cross-sectional view of a solid electrolyte sheet according to a second embodiment of the present invention.
Figure 8 is a cross-sectional view of a solid electrolyte sheet according to a modification of the second embodiment of the present invention.

### Description of Embodiments

Embodiments of the present invention will be described in detail with reference to drawings below, but the present invention is not limited to the following embodiments, and is not limited to the following embodiments, and various modifications and various application examples within the technical concept of the present invention are also included in the scope of the present invention.

### Example 1

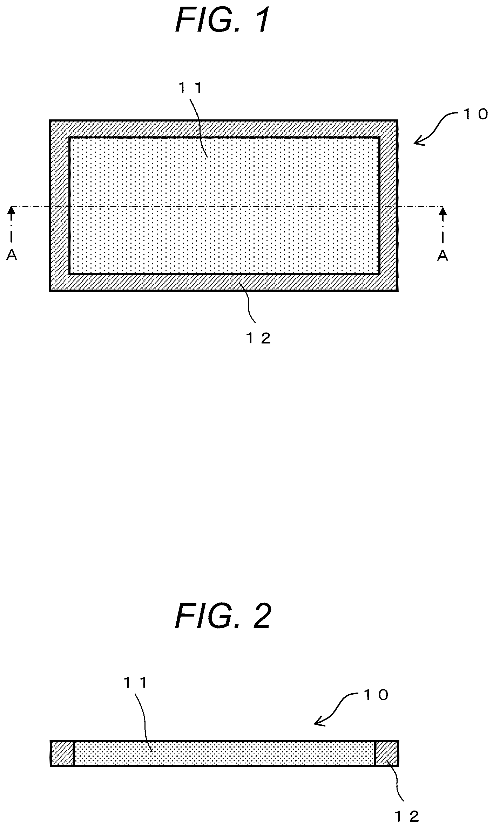

A configuration of a solid electrolyte sheet according to a first embodiment of the present invention will be described with reference to Figure 1 and Figure **2****.** Also, Figure 1 shows a plane viewed from a side of a first surface (front surface) of the solid electrolyte sheet, and Figure 2 shows a cross section of the solid electrolyte sheet taken along a line A-A in Figure 1.

As shown in Figures 1 and 2, a solid electrolyte sheet 10 includes a rectangular central area 11 (corresponding to a base referred to in the claims) having a first surface (front surface) and a second surface (back surface), and a periphery reinforcement area 12 (corresponding to a reinforcing part referred to in the claims) along an outer periphery shape of the central area 11. The central area 11 and the periphery reinforcement area 12 are formed in a plate shape, and the periphery reinforcement area 12 is formed to surround the rectangular central area 11 from four sides on the outside of the central area 11. Further, if necessary, the periphery reinforcement area 12 can be formed only on the periphery of two opposite sides or three sides.

In this example, in the present embodiment, the periphery reinforcement area 12 is formed in a frame shape surrounding the central area 11 from outer four sides, and configured to increase rigidity with respect to the central area 11. Furthermore, a configuration and a method for increasing the rigidity will be described later.

As described above, with the provision of the periphery reinforcement area 12, not only the rigidity of the periphery of the solid electrolyte sheet 10 can be increased but also the overall rigidity of the solid electrolyte sheet 10 can be increased.

Also, since the overall rigidity of the solid electrolyte sheet 10 can be increased, the area of the solid electrolyte sheet 10 can be increased, and a large ion conduction region can be secured. Further, a configuration, etc. in which the area of the solid electrolyte sheet 10 is increased will be described in a second embodiment.

Also, when handling the solid electrolyte sheet, the periphery of the solid electrolyte sheet is often gripped, and at this time, there is a risk that the periphery of the solid electrolyte sheet is damaged and the solid electrolyte sheet becomes defective and cannot be used.

On the other hand, since the rigidity of the solid electrolyte sheet 10 is enhanced by providing the periphery reinforcement area 12, the periphery of the solid electrolyte sheet is not damaged, and the solid electrolyte sheet can be prevented from becoming defective and unusable.

The central area 11 is a central area of the solid electrolyte sheet 10 in an in-plane direction, and the periphery reinforcement area 12 is a periphery reinforcement area of the solid electrolyte sheet 10 in the in-plane direction. The central area 11 of the solid electrolyte sheet 10 is made of only solid electrolyte, and the periphery reinforcement area 12 is formed of a composite member including an electrically insulating solid electrolyte (powder) or inorganic oxide (powder), which is a first electrical insulating member, and an electrically insulating holder, which is a second electrical insulating member that holds the solid electrolyte or inorganic oxide.

A thickness of the solid electrolyte sheet 10 is about 15 µm to 100 µm, and when considering an energy density of the battery, the thickness is preferably 15 µm to 30 µm. In the present embodiment, the thickness of the solid electrolyte sheet 10 is set to 30 µm.

Since the central area 11 of the solid electrolyte sheet 10 is an active area of a secondary battery, lithium ionic conductivity at 25 °C is, for example, 1×10⁻⁷ S/cm or more, preferably 1×10⁻³ S/cm. Also, the central area 11 is configured to include the powder of an oxide solid electrolyte or a sulfide-based solid electrolyte.

In this example, the central area 11 may contain one type of solid electrolytes (powders) alone, or may contain two or more types of solid electrolytes (powders) mixed together. Furthermore, the central area 11 may contain fibers or powders of inorganic compounds such as fillers as reinforcing members, and furthermore, the central area 11 may contain other components such as binders. Hereafter, those components are included and expressed as solid electrolytes.

The solid electrolyte made of those powders and fibers is held in a hollow holding body made of inorganic material or organic material and has the central area 11. In the present embodiment, a non-woven sheet made of an organic material is used as the holder. Furthermore, the holder is not limited to a non-woven sheet but can also be a lattice-shaped sheet in which warp and weft are knitted. Then, the solid electrolyte described above is kneaded into a slurry form, applied to the holder forming the central area 11, and dried.

As described above, the slurry-like solid electrolyte is applied to the holder so that the central area 11 of the solid electrolyte sheet 10 described above can be formed. Furthermore, it is safe even if a solid electrolyte is present in the periphery reinforcement area 12 other than the central area 11. Since a non-woven sheet is used, solid electrolyte can be filled to the inside of the non- woven sheet by pressure-molding.

Also, the periphery reinforcement area 12, which is characteristic of the present embodiment, is provided in a frame shape on the outer four sides of the solid electrolyte sheet 10, as described above. However, as described above, the periphery reinforcement area 12 may be configured to be provided only on a side where there is a positive current collector foil and a negative current collector foil out of the four sides of the solid electrolyte sheet 10. With the provision of the periphery reinforcement area 12, the battery can be prevented from being short-circuited due to a contact between the positive current collector foil and the negative electrode collector foil. This will be described in detail in a second embodiment, which will be discussed later.

A width in the surface direction of the periphery reinforcement area 12 can be preferably set to a length of about 2 mm from the viewpoint of the energy density of the secondary battery. Since the periphery reinforcement area 12 is present outside the active area of the secondary battery, there is practically no problem even if the lithium-ion conductivity is low, and the periphery reinforcement area 12 may be made of a material whose lithium-ion conductivity at 25 °C is, for example, preferably 1×10⁻⁴ S/cm or less, or a material having no lithium ionic conductivity. Naturally, in consideration of ease of production, the same solid electrolyte as that of the central area 11 may also be used for the same lithium-ion conductivity.

Also, as described above, the periphery reinforcement area 12 includes the first electrical insulating member and the second electrical insulating member. Specifically, the periphery reinforcement area 12 is made of a composite member including a first electrical insulating member made of a powdery electrical insulating material and a second electrical insulating member made of an electrically insulating holder holding the powdery electrical insulating material.

As the first electrical insulating member, a solid electrolyte that has electrical insulation and contains lithium ions, and an electrical insulating material such as aluminum oxide that has electrical insulation and does not contain lithium ions can be used. Those members are processed into powder form, and in the present embodiment, a solid electrolyte is used as the first insulating member. A sulfide-based solid electrolyte or an oxide solid electrolyte can be used for the solid electrolyte.

The second insulating member is made of an inorganic material or organic material with electrical insulation properties, etc., and has a function of a holding member holding the first electrical insulating member. In the present embodiment, a non-woven fabric made from an organic material is used as the second electrical insulating member. Furthermore, the second electrical insulating member is not limited to the non-woven fabric but can also be made into a lattice-like form in which warp and weft are knitted.

Glass fiber, etc. made from quartz glass can be used as the inorganic material, and polypropylene, polyethylene, etc. can be used as the organic material, and those materials are molded into a non-woven shape and can be used. In the present embodiment, a polypropylene nonwoven fabric is used. Therefore, in the present embodiment, the periphery reinforcement area 12 is formed by a combination of the first electrical insulating member as an inorganic material and the second electrical insulating member as an organic material.

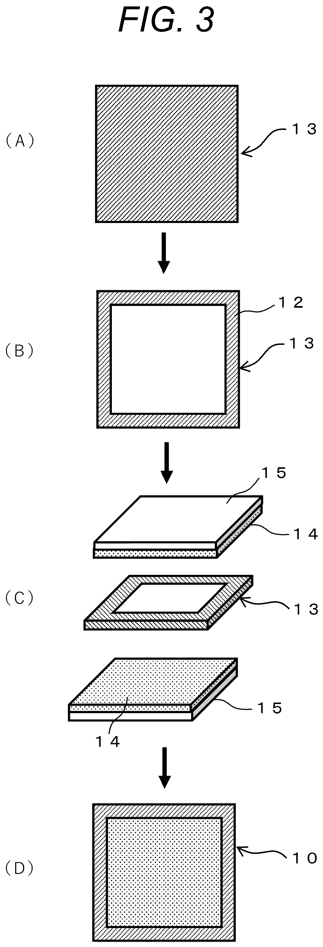

Next, a method of manufacturing the solid electrolyte sheet 10 will be described with reference to Figures 3.

In the solid electrolyte sheet 10 according to the present embodiment, a periphery reinforcement sheet 13 forming forms the periphery reinforcement area 12 and a solid electrolyte base sheet 14 formed in the same external shape as that of the periphery reinforcement sheet 13 are superimposed and pressure-molded. The superimposed laminated area becomes a periphery reinforcement area 12 with increased rigidity.

First, in Figure 3(A), a rectangular non-woven fabric (second electrical insulating member) made of polypropylene is prepared, and as shown in Figure 3(B), an interior of the rectangular non-woven fabric is cut out to form the periphery reinforcement area 12, and a periphery reinforcement sheet13 is produced. As a result, an area for exposing the periphery reinforcement area 12 and the central area 11 of the solid electrolyte sheet 10 can be provided.

Also, separately, a solid electrolyte is applied to a base 15 made of polyethylene terephthalate (PET) and dried to prepare the solid electrolyte base sheet 14.

Next, in Figure 3(C), the solid electrolyte base sheets 14 are superimposed to sandwich the periphery reinforcement sheet 13 from both sides to form a laminated shape. The solid electrolyte base sheet 14 is placed on the base 15 made of polyethylene terephthalate (PET), and the solid electrolyte base sheet 14 is pressure-molded with a press machine against the periphery reinforcement sheet13 using the base 15 as a support.

As a result, a peripheral part of the solid electrolyte base sheet 14 (corresponding to the periphery reinforcement area 12) of the solid electrolyte base sheet 14 and the periphery reinforcement sheet 13 are pressed in a superimposed state, so that the solid electrolyte of the solid electrolyte base sheet 14 and the solid electrolyte of the periphery reinforcement sheet 13 are integrally formed in a state where those solid electrolytes are mixed with each other.

As described above, since the solid electrolyte base sheet 14 forming the central area 11 and the periphery reinforcement sheet 13 forming the periphery reinforcement area 12 are integrally formed in a superimposing manner, the rigidity of the periphery of the solid electrolyte sheet 10 can be sufficiently enhanced. The base 15 is removed after the above pressing so that a solid electrolyte sheet 10 as shown in Figure 3(D) can be obtained.

In this example, slurry-like solid electrolyte is applied to the periphery reinforcement sheet 13 and the solid electrolyte base sheet 14, and pre-pressurized, the periphery reinforcement sheet 13 and the solid electrolyte base sheet 14 are pre-filled with solid electrolyte, and the both are laminated on each other and pressurized before drying, so that the both can be integrated together.

Also, a slurry-like solid electrolyte is applied from a top of the periphery reinforcement sheet 13 laid on the base 15 and dried. After pressing the dried sheet, the base 15 may be peeled off and removed to prepare the solid electrolyte sheet 10.

In the present embodiment, the periphery reinforcement area 12 is formed on the outer periphery of the solid electrolyte sheet 10, and a solid electrolyte filling method, etc. may appropriately adopt various methods.

According to the solid electrolyte sheet 10 of the present embodiment described above, the central area 11 is made of a solid electrolyte having lithium-ion conductivity, and the periphery reinforcement area 12 on the outer periphery has increased rigidity as a composite material. As a result, the lithium-ion conductivity of the central area 11, which is an active area where the positive electrode layer and the negative electrode layer face each other, can be sufficiently maintained. Also, since the rigidity in the vicinity of the periphery of the solid electrolyte sheet 10 is large, the risk of damage to this part can be reduced. Furthermore, since the rigidity in the vicinity of the periphery is large, the overall rigidity of the solid electrolyte sheet 10 can also be improved.

For example, when assembling a solid electrolyte secondary battery using the solid electrolyte sheet 10, if damage occurs in the vicinity of the periphery of the electrolyte sheet damage, there is a risk that the positive electrode layer and the negative electrode layer are short-circuited, but in the present embodiment, since the rigidity of the vicinity of the periphery of the solid electrolyte sheet 10 is large, such a problem can be solved. This will also be described in a second embodiment.

Similarly, when handling a solid electrolyte sheet, the periphery of the solid electrolyte sheet 10 is often grasped, and at this time, there is a risk that the periphery of the solid electrolyte sheet 10 may be damaged. Therefore, there is a risk that the solid electrolyte sheet 10 may become defective and unusable, but in the present embodiment, since the rigidity of the vicinity of the periphery of the solid electrolyte sheet 10 is large, such a problem can be solved.

Since the rigidity in the vicinity of the overall solid electrolyte sheet 10 is improved by high rigidity in the vicinity of the periphery of the solid electrolyte sheet 10, handling is further improved. Furthermore, since the overall rigidity is improved, the size of the solid electrolyte sheet 10 can be increased, and a large ion conduction region can be secured.

Also, as the first electrical insulating member in the periphery reinforcement area 12, solid electrolytes and aluminum oxide can be used. According to the above configuration, a production efficiency can be increased by using the same solid electrolyte as that of the central area 11, and material costs can be reduced by using inorganic materials such as aluminum oxide that do not have lithium-ion conductivity.

Also, the external shapes of the solid electrolyte base sheet 14 and the periphery reinforcement sheet 13 match with each other so that the positioning of the respective sheets is facilitated in a lamination process in which the periphery reinforcement sheet 13 is sandwiched between a pair of solid electrolyte base sheets 14.

In other words, the external shape of the solid electrolyte base sheet 14 and the external shape of the periphery reinforcement sheet 13 are formed in the same rectangular shape, and the dimensions are also determined similarly. As a result, the periphery of the solid electrolyte base sheet 14 and the periphery reinforcement sheet 13 coincide in shape.

Also, since a non-woven fabric made of organic material is used as the second insulating member in the periphery reinforcement area 12, solid electrolyte or inorganic oxide powder (first electrical insulating member) can be pressurized and pressed into a gap of the non-woven fabric to form a composite, making it possible to provide a thin and highly rigid solid electrolyte sheet with a thickness of about 30 µm.

As described above, according to the present embodiment, the periphery reinforcement area 12 is formed so that not only the periphery of the electrolyte sheet 10 but also ultimately the overall rigidity of the electrolyte sheet can be enhanced. As a result, since the rigidity in the vicinity of the periphery of the solid electrolyte sheet can be increased, the risk of damage in the vicinity of the periphery of the solid electrolyte sheet can be reduced. Also, since the overall rigidity of the solid electrolyte sheet 10 can be increased, the area of the solid electrolyte sheet 10 can be increased, and a large ion conduction region can be secured.

### <Modification 1>

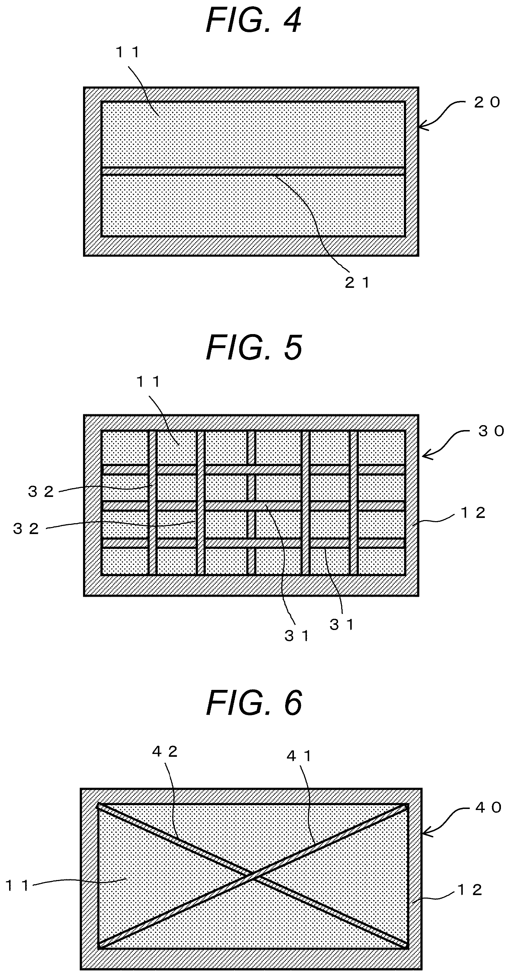

Next, a first modification of the present embodiment will be described with reference to Figure 4. Figure 4 shows a plane of the solid electrolyte sheet, and the same reference numbers are attached to the same functional elements as the first embodiment.

The solid electrolyte sheet 20 includes a rectangular central area 11 having a first surface (front surface) and a second surface (back surface), and a periphery reinforcement area 12 extending along an outer periphery shape of the central area 11. The central area 11 and the periphery reinforcement area 12 are formed in a plate shape, and the periphery reinforcement area 12 is formed outside the central area 11 so as to surround the rectangular central area 11 from four sides.

In this example, even in the present modification, the periphery reinforcement area 12 is formed in a frame shape that surrounds the central area 11 from four sides, and configured so that the rigidity increases with respect to the central area 11. Furthermore, the configuration and method for increasing the rigidity have been described above.

Furthermore, in the present modification, as shown in Figure 4, an auxiliary reinforcement area 21 is provided in the central area 11 of the solid electrolyte sheet 20. The auxiliary reinforcement area 21 is formed into an elongated shape in which the vicinities of the center of short sides opposite to each other of the solid electrolyte sheet 20 are connected to each other, and integrated with the periphery reinforcement area 12. For example, the periphery reinforcement sheet 13 in Figure 3 can be cut out into a shape shown in Figure 4, and is made of a composite material including the first electrical insulating member and the second electrical insulating member as in the periphery reinforcement area 12 of the first embodiment. Further, in the present embodiment, opposite short sides are connected by the auxiliary reinforcement area 21, but facing long sides may be connected with the auxiliary reinforcement area 21.

The reason for establishing such an auxiliary reinforcement area 21 is as follows. When the area of the central area 11 of the solid electrolyte sheet 20 is large, for example, the area of the central area 11 is 10 cm² or more, if the central area 11 is accidentally touched during handling of the solid electrolyte sheet 20, since the central area 11 is less rigid than the periphery reinforcement area 12 and has a larger area, there is a risk that the central area 11 may be damaged.

Therefore, in the present modification, the auxiliary reinforcement area 21 connected to the periphery reinforcement area 12 is provided. As a result, the rigidity of the central area 11 can be further improved, and even if the central area 11 is accidentally touched while handling the solid electrolyte sheet 20, an event that the central area 11 is damaged can be avoided.

In this example, since the auxiliary reinforcement area 21 is present in the central area 11, which is an active area, it is preferable that the lithium-ion conductivity is close to the central area 11. As a result, excellent battery performance can be obtained and the rigidity of the central area 11 can also be improved.

As described above, according to the present modification, since the solid electrolyte sheet 20 has the auxiliary reinforcement area 21 described above, a risk that the solid electrolyte sheet 20 is damaged during handling work such as a process of forming the solid electrolyte sheet 20 and a process of lamination after forming the solid electrolyte sheet 20 can be reduced.

Also, since the auxiliary reinforcement area 21 is present within a range of the active area of a battery, a first electrical insulation member of the auxiliary reinforcement area 21 is made of a solid electrolyte having lithium-ion conductivity, and the lithium-ion conductivity preferably has as close a value as possible to the lithium-ion conductivity of the central area 11.

As described above, according to the present modification, the rigidity of the central area 11, which is the active area of the solid electrolyte sheet 20, is further enhanced, and furthermore, the auxiliary reinforcement area 21 can also be used as an active area.

### <Modification 2>

Next, a second modification of the present embodiment will be described with reference to Figure 5. Figure 5 shows a plane of a solid electrolyte sheet, and the same reference numbers are attached to the same functional elements as the first embodiment.

A solid electrolyte sheet 30 includes a rectangular central area 11 having a first surface (front surface) and a second surface (back surface), and a periphery reinforcement area 12 extending along an outer periphery shape of the central area 11. The central area 11 and the periphery reinforcement area 12 are formed in a plate shape, and the periphery reinforcement area 12 is formed to surround the rectangular central area 11 from four sides outside the central area 11.

In this example, even in the present modification, the periphery reinforcement area 12 is formed in a frame shape that surrounds the central area 11 from four sides, and is configured so that the rigidity increases with respect to the central area 11. Furthermore, the configuration and method for increasing the rigidity have been described above.

Furthermore, in the present modification, as shown in Figure 5, horizontal auxiliary reinforcement areas 31 and vertical auxiliary reinforcement areas 32, which are formed in a grid shape, in the central area 11 of the solid electrolyte sheet 30.

The horizontal auxiliary reinforcement areas 31 are formed in an elongated shape that connects positions (three places in this case) at which short sides of the solid electrolyte sheet 30, which are opposite to each other, are divided into equal parts, and are formed integrally with the periphery reinforcement area 12. Similarly, the vertical auxiliary reinforcement areas 32 are formed in an elongated shape that connects positions (five places in this case) at which long sides of the solid electrolyte sheet 30, which are opposite to each other, are divided into equal parts, and are formed integrally with the periphery reinforcement area 12.

As in the first modification, the horizontal auxiliary reinforcement areas 31, the vertical auxiliary reinforcement areas 32, and the periphery reinforcement area 12 can be formed by cutting out the periphery reinforcement sheet 13 shown in Figure 3 into a shape shown in Figure 5, and is made of a composite member including the first electrical insulating member and the second electrical member as in the periphery reinforcement area 12 of the first embodiment.

The reason for providing such auxiliary reinforcement areas 31 and 32 is the same as that in Modification 1. Therefore, the present modification is configured to provide the lattice-shaped auxiliary reinforcement areas 31 and 32 connected to the periphery reinforcement area 12. As a result, the rigidity of the central area 11 is further improved, and an event where even if the central area 11 is mistakenly touched during handling the solid electrolyte sheet 30, the central area 11 is damaged can be avoided.

In this example, since the auxiliary reinforcement areas 31 and 32 are present in the central area 11, which is the active area, it is preferable that the lithium-ion conductivity is close to the central area 11. As a result, excellent battery performance can be obtained and the rigidity of the central area 11 can also be improved.

As described above, according to the present modification, since the solid electrolyte sheet 30 has the lattice-shaped auxiliary reinforcement areas 31 and 32 described above, a risk that the solid electrolyte sheet 30 is damaged during handling work such as a process of forming the solid electrolyte sheet 30 and a process of lamination after forming the solid electrolyte sheet 30 can be reduced.

Also, since the lattice-shaped auxiliary reinforcement areas 31 and 32 are present within the range of the active area of the battery, the first electrical insulation members of the auxiliary reinforcement areas 31 and 32 are made of a solid electrolyte having lithium-ion conductivity, and the lithium-ion conductivity preferably has as close a value as possible to the lithium-ion conductivity of the central area 11.

As described above, according to the present modification, the rigidity of the central area 11, which is the active area of the solid electrolyte sheet 30, is improved, and furthermore, the lattice-shaped auxiliary reinforcement areas 31 and 32 can also be used as active areas.

Furthermore, with the lattice-shaped auxiliary reinforcement areas 31 and 32, the aspect ratio of each surface of the central area 11 made of only the solid electrolytes can be set arbitrarily. As a result, the effect of selecting appropriate rigidity while securing the lithium-ion conductivity can be obtained.

### <Modification 3>

Next, a third modification of the present embodiment will be described with reference to Figure 6. Figure 6 shows a plane of a solid electrolyte sheet, and the same reference numbers are attached to the same functional elements as the first embodiment.

A solid electrolyte sheet 40 includes a rectangular central area 11 having a first surface (front surface) and a second surface (back surface), and a periphery reinforcement area 12 extending along an outer periphery shape of the central area 11. The central area 11 and the periphery reinforcement area 12 are formed in a plate shape, and the periphery reinforcement area 12 is formed outside the central area 11 so as to surround the rectangular central area 11 from four sides.

In this example, even in the present modification, the periphery reinforcement area 12 is formed in a frame shape that surrounds the central area 11 from four sides, and is configured so that the rigidity increases with respect to the central area 11. Furthermore, the configuration and method for increasing the rigidity have been described above.

Furthermore, in the present modification, as shown in Figure 6, a first oblique auxiliary reinforcement area 41 and a second oblique auxiliary reinforcement area 42, which are formed in a diagonal shape, are provided in the central area 11 of the solid electrolyte sheet 40.

The first oblique auxiliary reinforcement area 41 and the second oblique auxiliary reinforcement area 42 are formed in an elongated shape along diagonal lines of the rectangular central area 11 of the solid electrolyte sheet 40, and are formed integrally with the periphery reinforcement area 12. As in Modification 1, the periphery reinforcement sheet 13 shown in Figure 3 can be cut out into a shape shown in Figure 6, and is made of a composite member including the first electrical insulating member and the second electrical member as in the periphery reinforcement area 12 of the first embodiment.

The reason for providing such oblique auxiliary reinforcement areas 41 and 42 is the same as that in Modification **1.** Therefore, the present modification is configured to provide the oblique auxiliary reinforcement areas 41 and 42 along the diagonal lines connected to the periphery reinforcement area 12. As a result, the rigidity of the central area 11 can be improved, and an event where even if the central area 11 is mistakenly touched during handling the solid electrolyte sheet 40, the central area 11 is damaged can be avoided.

In this example, since the oblique auxiliary reinforcement areas 41 and 42 are present in the central area 11 which is the active area, the lithium-ion conductivity is preferably close to the central area 11. As a result, excellent battery performance can be obtained and the rigidity of the central area 11 can also be improved.

As described above, according to the present modification, the solid electrolyte sheet 40 has the oblique auxiliary reinforcement areas 41 and 42 along the diagonal lines described above, a risk that the solid electrolyte sheet 40 is damaged during handling work such as a process of forming the solid electrolyte sheet 40 and a process of lamination after forming the solid electrolyte sheet 40 can be reduced.

Also, since the oblique auxiliary reinforcement areas 41 and 42 along the diagonal lines are present within the range of the active area of the battery, the first insulation members of the oblique auxiliary reinforcement areas 41 and 42 are made of a solid electrolyte having lithium-ion conductivity, and the lithium-ion conductivity preferably has as close a value as possible to the lithium-ion conductivity of the central area 11.

As described above, according to the present modification, the rigidity of the central area 11, which is the active area of the solid electrolyte sheet 40, is improved, and the oblique auxiliary reinforcement areas 41 and 42 can also be used as active areas.

### Example 2

Next, a solid electrolyte secondary battery according to a second embodiment of the present invention will be described, but before that, issues leading up to the second embodiment will be briefly described. Further, a solid electrolyte sheet 10 used in a solid electrolyte secondary battery to be described below is the solid electrolyte sheet 10 according to the first embodiment.

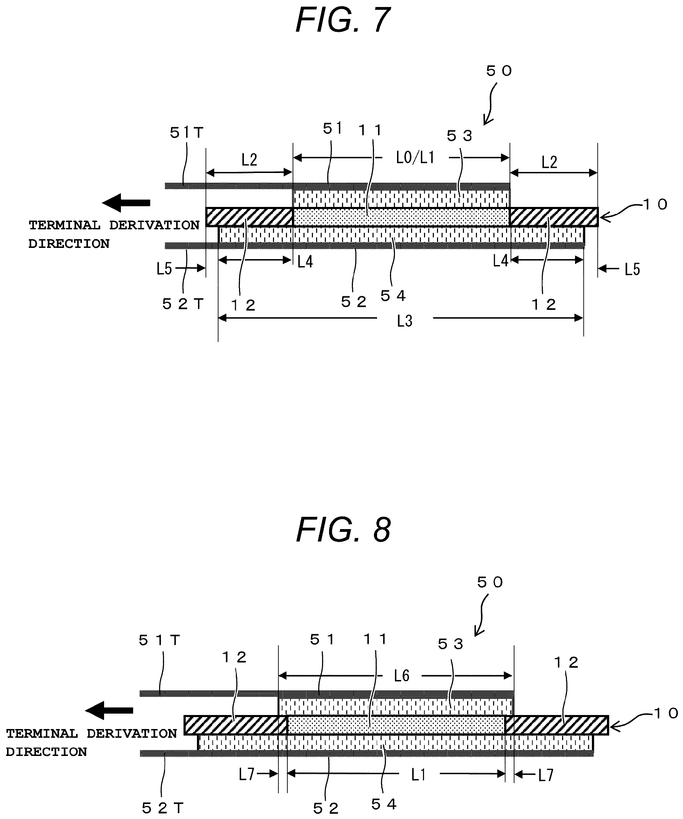

Assuming that a thickness of the solid electrolyte sheet 10 is formed at 30 µm, for example, the solid electrolyte sheet 10 is made of only a solid electrolyte as in the central area 11, without having the periphery reinforcement area 12. In this case, when a positive electrode layer 53 and a negative electrode layer 54 shown in Figure 7 are laminated to form a secondary battery, since there is no periphery reinforcement area 12, the rigidity of an end surface of the solid electrolyte sheet 10 is small.

Therefore, when some mechanical external force acts on this part, this part collapses, and a short circuit occurs between the positive electrode layer 53 and the negative electrode layer 54. In this type of product, ensuring safety is the most important issue, and thorough preparations must be made to prevent accidents from occurring.

Also, a structure of a general solid electrolyte secondary battery forms an area of the negative electrode layer larger than an area of the positive electrode layer. Therefore, considering the collapse of the end surface of the solid electrolyte sheet 10, the area of the solid electrolyte sheet 10 cannot be made larger than the area of the negative electrode layer, and insulation treatment is necessary for collector foils or terminals of the positive electrode layer and the negative electrode, which is a hindrance factor for deriving a lot of electric power. Thus, since the area of the solid electrolyte sheet 10 cannot be increased, it is difficult to resultantly secure a large ion conduction region.

In order to respond to such issues, the present embodiment proposes a solid electrolyte secondary battery as shown in Figure 7. Furthermore, a unit battery is shown in Figure 7, and in fact, multiple solid-state electrolyte batteries are stacked to form a secondary battery.

Figure 7 shows a cross-section of a solid electrolyte secondary battery 50 along a derivation direction of a positive current collector foil 51 and a negative current collector foil 52. The positive current collector foil 51 has a positive terminal 51T, and the negative current collector foil 52 has a negative terminal 52T. In the solid electrolyte secondary battery 50, a positive electrode layer 53 made of a positive electrode active material is formed on one side of the solid electrolyte sheet 10, and a negative electrode layer 54 made of a negative electrode active material is formed on the other side of the solid electrolyte sheet 10.

The positive current collector foil 51 is attached on a surface of the positive electrode layer 53 opposite to the solid electrolyte sheet 10 so as to be electrically conductive, and in the same manner, the negative current collector foil 52 is attached on a surface of the negative electrode layer 54 opposite to the solid electrolyte sheet 10 so as to be electrically conductive. As a result, lithium ions are charged or discharged by flowing from the positive electrode layer 53 to the negative electrode layer 54 or from the negative electrode layer 54 to the positive electrode layer 53, thus obtaining a secondary battery that can be charged and discharged. Since such behavior has already been well known, additional description will be omitted.

Then, the characteristic configuration of the present embodiment is as follows. First, when viewed in a terminal derivation direction (longitudinal direction), a length (LO) of the positive electrode layer 53 is formed to be the same length as a length (L1) of the central area 11 of the solid electrolyte sheet 10. Therefore, an end surface of the positive electrode layer 53 on the opposite side of the positive terminal 51T of the positive current collector foil 51 and an end surface of the central area 11 of the solid electrolyte sheet 10 corresponding to the former end surface have a consistent relationship when viewed in the terminal derivation direction (so-called flush relationship surface).

In other words, in the present embodiment, a projection image of the positive electrode layer 53 in a direction perpendicular to the terminal derivation direction is determined to have overlapping dimensions that match the central area 11 of the solid electrolyte sheet 10.

Also, end surfaces of the periphery reinforcement areas 12 of the solid electrolyte sheet 10 on one side of the positive terminal 51T of the positive current collector foil 51 and on the other side opposite to the positive terminal 51T have a length (L2) and protrude from the end faces of the positive electrode layer 53. Therefore, since the positive electrode layer 53 is in full contact with the central area 11 of the solid electrolyte sheet 10, which is the active area, lithium ions can move efficiently, and the input/output characteristics of the secondary battery can be improved.

On the other hand, when viewed in the terminal derivation direction (longitudinal direction), a length of the negative electrode layer 54 (L3) is longer than the length (L1) of the central area 11 of the solid electrolyte sheet 10. Thus, end surfaces of the negative electrode layer 54 on a side of the negative terminal 52T of the negative current collector foil 52 and on the opposite to the negative electrode terminal 52T have a length (L4) and protrude from the end surfaces of the central area 11 of the solid electrolyte sheet 10. For that reason, since the negative electrode layer 54 is completely in contact with the central area 11 of the solid electrolyte sheet 10, which is the active area, lithium ions can be efficiently transferred.

Also, the end surfaces of the periphery reinforcement areas 12 of the solid electrolyte sheet 10 protrude from the end surfaces of the negative electrode layer 54 by a length (L5). Therefore, the periphery reinforcement area 12 is configured to support the end surface of the negative electrode layer 54. Therefore, even if some mechanical external force acts on the end surface of the negative electrode layer 54, the periphery reinforcement area 12 can receive the external force from the negative electrode layer 54, so that damage to the solid electrolyte sheet 10 can be suppressed. As a result, short circuit between the positive electrode layer 53 and the negative electrode layer 54 can be prevented.

As described above, in the solid electrolyte sheet 10, since the overall rigidity of the solid electrolyte sheet 10 is reinforced by the periphery reinforcement area 12, even if the thickness is as thin as about 30 µm, the area can be set to be larger than the negative electrode layer 54, and as a result, the battery can be prevented from being short-circuited by the positive current collector foil 51 and the negative current collector foil 52 coming into contact with each other.

Also, since the overall rigidity of the solid electrolyte sheet 10 has been reinforced, even if the thickness of the solid electrolyte sheet 10 is as thin as about 30 µm, the area of the solid electrolyte sheet 10 can be set to be larger than the area of the negative electrode layer 54 to secure a large ion conduction region, and the inhibitory factor for deriving a large amount of electric power can be eliminated.

With the solid electrolyte secondary battery 50 having such a configuration, a battery performance can be improved by using the solid electrolyte sheet 10 described in the first embodiment.

Also, the end surface of the positive electrode layer 53 is flush with the end surface of the central area 11 of the solid electrolyte sheet 10, and the end surfaces of the negative electrode layer 54 overlap with the periphery reinforcement area 12 of the solid electrolyte sheet 10. According to the above configuration, since the main reaction of the battery is performed in the central area 11, which has relatively high lithium-ion conductivity, a high battery performance can be obtained.

Meanwhile, when the press process is carried out in a state where the positive electrode layer 53, the negative electrode layer 54, and the solid electrolyte sheet 10 are laminated, there is a possibility that damage (crack) occurs at a boundary between the central area 11 and the periphery reinforcement area 12 in the solid electrolyte sheet 10, and the battery is short-circuited.

In contrast, since the end surface of the negative electrode layer 54 is in contact with the periphery reinforcement area 12 of the solid electrolyte sheet 10, even if the press process is carried out in a state where the positive electrode layer 53, the negative electrode layer 54, and the solid electrolyte sheet 10 are laminated, no damage occurs in the solid electrolyte sheet 10, and the battery can be prevented from being short-circuited.

Also, as described in the first embodiment, the first electrical insulating member of the periphery reinforcement area 12 is made of a solid electrolyte, so that the first electrical insulating member can also be used as an active area. Furthermore, when the ion conductivity of the periphery reinforcement area 12 is set low, current concentration in the periphery reinforcement area 12 can be suppressed, and effects such as suppressing lithium electrolysis and improving cycle characteristics can be expected.

Also, since the overall rigidity has been improved, a surface area of the solid electrolyte sheet 10 including the periphery reinforcement area 12 can be set to be larger than a surface area of the positive electrode layer 53 and a surface area of the negative electrode layer 54. This makes it possible to prevent the current collector foils of the positive current collector foil 51 of the positive electrode layer 53 and the negative current collector foil 52 of the negative electrode layer 54 from being in contact with each other and short-circuited.

### <<Modification>>

Next, a modification of the second embodiment will be described with reference to Figure 8. In Figure 8, the same reference numbers are attached to the same functional elements as the second embodiment (see Figure 7), and as in the second embodiment, Figure 8 shows a cross-section of a solid electrolyte secondary battery 50 along a derivation direction of a positive current collector foil 51 and a negative current collector foil 52.

The variation shown in Figure 8 is determined basically in the same shape and the same dimensional relationship as the second embodiment, and the lengths (L1) to (L5) are the same length. However, a difference resides in that the length of the positive electrode layer 53 is determined to be longer than that in the second embodiment, and in the present modification, the positive electrode layer 53 is determined to be the length (L7). The difference will be described below.

In Figure 8, a length (L6) of a positive electrode layer 53 is determined to be longer than the length (L1) of the central area 11 of the solid electrolyte sheet 10, and end surfaces of the positive electrode layer 53 on the side of the positive terminal 51T and on the opposite side of the positive terminal 51T exceeds the central area 11 and extends to the periphery reinforcement area 12 by a length (L7).

As described above, the periphery reinforcement area 12 is configured to support the end surface of the positive electrode layer 53. For that reason, even if some mechanical external force acts on the end surface of the positive electrode layer 53, the periphery reinforcement area 12 can receive the load from the positive electrode layer 53, so that damage to the solid electrolyte sheet 10 can be suppressed. As a result, short-circuiting between the positive electrode layer 53 and the negative electrode layer 54 can be prevented. Also, even in the present modification, it is needless to say that the same effects as those in the second embodiment described above can be obtained.

As described above, according to the present invention, there is provided a solid electrolyte sheet including a base containing a solid electrolyte and formed in a plate shape, and a plate-shaped reinforcing part formed on an outside of the base, in which the reinforcing part is made of a composite material made of a combination of two electrical insulating members different in material, and higher in rigidity than the base.

As described above, since rigidity in the vicinity of the periphery of the solid electrolyte sheet can be increased in particular, a risk of damage in the vicinity of the periphery of the solid electrolyte sheet can be reduced.

Also, since the overall rigidity of the solid electrolyte sheet can be increased, the solid electrolyte sheet can be enlarged and a large ion conduction region can be secured.

Furthermore, the present invention is not limited to the examples described above, and includes various modifications. For example, the above examples have been described in detail to describe the present invention in an easy-to-understand manner, and are not necessarily limited to those having all the described configurations. Also, part of the configuration of one embodiment can be replaced with the configuration of another embodiment, and the configuration of another embodiment can be added to the configuration of one embodiment. Also, other configurations can be added, deleted, or replaced for part of the configuration of each embodiment. The present invention further embraces the following aspects:
According to a first aspect, a solid electrolyte sheet, comprises: a base formed in a plate shape containing a solid electrolyte; and a plate-like reinforcing part formed on an outside of the base, wherein the reinforcing part is made of a combination of two electrical insulating members different in material, and being higher in rigidity than the base.

According to a second aspect, the base is formed in a rectangular shape, the reinforcing part is formed in a frame shape corresponding to four sides of the base, and a peripheral shape of the reinforcing part is rectangular. According to a third aspect, the reinforcing part may further contain a solid electrolyte.

According to a fourth aspect, the composite member of the solid electrolyte sheet according to the second aspect includes a first electrical insulating member and a second electrical insulating member, the first electrical insulating member is made of a powdery electrical insulator, and the second electrical insulating member is made of an electrical insulator having a gap that holds the first electrical insulating member.

According to a fifth aspect, the solid electrolyte of the fourth aspect is a sulfide-based solid electrolyte or an oxide solid electrolyte.

According to a sixth aspect, the first electrical insulating member according to the fourth aspect is made of a powdery inorganic material. According to a seventh aspect, the powdery inorganic material, which is the first electrical insulating member, may be the solid electrolyte or aluminum oxide. According to an eighth aspect, the second electrical insulating member may further be made of a nonwoven fabric formed from an organic material or a non-woven fabric formed from an inorganic material.

According to a ninth aspect, in the solid electrolyte sheet according to the second aspect, external shapes of the solid electrolyte base sheet forming the base and the reinforcement sheet forming the reinforcing part are rectangular with the same dimensions, and an inside of the reinforcing sheet is cut out in a rectangular shape to expose the base in a state where the solid electrolyte base sheet and the reinforcement sheet are superimposed. According to a tenth aspect, in a state where the solid electrolyte base sheet and the reinforcing sheet forming the reinforcing part are superimposed, the superimposed parts may be pressed and integrated together.

According to an eleventh aspect, in the solid electrolyte sheet according to any one of the second to tenth aspects, in the reinforcing part, an auxiliary reinforcing part formed in an elongated shape connecting opposite sides of the reinforcing part formed in a rectangular frame shape is formed in the reinforcing part.

According to a twelfth aspect, in the solid electrolyte sheet according to any one of the second to tenth aspects, the reinforcing part is formed with a lattice-shaped auxiliary reinforcing part formed in an elongated shape connecting sides opposite to each other, of the reinforcing part formed in the rectangular frame-shape and sides opposite to each other, of the other reinforcing part.

According to a thirteenth aspect, in the solid electrolyte sheet according to any one of the second to tenth aspects, the reinforcing part is formed with an auxiliary reinforcing part formed in an elongated shape along a diagonal line of the reinforcing part formed in a rectangular frame shape.

According to a fourteenth aspect, a solid electrolyte secondary battery comprising: the solid electrolyte sheet according to any one of the first to thirteenth aspects; a positive electrode layer provided on one side of the solid electrolyte sheet; and a negative electrode layer provided on the other surface of the solid electrolyte sheet.

According to a fifteenth aspect, in the solid electrolyte secondary battery according to the fourteenth aspect, a positive current collector foil is provided on a surface of the positive electrode layer on the opposite side to the solid electrolyte sheet, a negative current collector foil is provided on a surface of the negative electrode layer on the opposite side to the solid electrolyte sheet, a position of an end surface of the positive electrode layer on the opposite side to the positive terminal of the positive current collector foil coincides with a position of an end surface of the base of the solid electrolyte sheet, and an end surface of the negative electrode layer on the opposite side to the negative terminal of the negative current collector foil protrudes from an end surface of the base of the solid electrolyte sheet and reaches the reinforcing part.

According to a sixteenth aspect, in the solid electrolyte secondary battery according to the fourteenth aspect, a positive current collector foil is provided on a surface of the positive electrode layer on the opposite side to the solid electrolyte sheet, a negative current collector foil is provided on a surface of the negative electrode layer on the opposite side to the solid electrolyte sheet, an end surface of the positive electrode layer on the opposite side to the positive terminal of the positive current collector foil protrudes from an end surface of the base of the solid electrolyte sheet and reaches the reinforcing part, and an end surface of the negative electrode layer on the opposite side to the negative terminal of the negative current collector foil protrudes from the end surface of the base of the solid electrolyte sheet and reaches the reinforcing part.

According to a seventeenth aspect, in the solid electrolyte secondary battery according to the sixteenth aspect, the end surface of the negative electrode layer on the opposite side to the negative terminal of the negative current collector foil protrudes further from the end surface of the base of the solid electrolyte sheet against the end surface of the positive electrode layer on the opposite side to the positive terminal increased, a of the positive current collector foil, and reaches the reinforcing part.

According to an eighteenth aspect, in the solid electrolyte secondary battery according to any one of the fifteenth to seventeenth aspects, a surface area of the solid electrolyte sheet is determined to be equal to or greater than a surface area of the positive electrode layer and a surface area of the negative electrode layer.

### Reference Signs List

10... solid electrolyte sheet, 11... central area, 12... periphery reinforcement area, 13... periphery reinforcement sheet, 14... solid electrolyte base sheet, 15... base, 20... solid electrolyte sheet, 21... auxiliary reinforcement area, 30... solid electrolyte sheet, 31... horizontal auxiliary reinforcement area, 32... vertical auxiliary reinforcement area, 40... solid electrolyte sheet, 41... first oblique auxiliary reinforcement area, 42... second oblique auxiliary reinforcement area, 50... solid electrolyte secondary battery, 51... positive current collector foil, 51T... positive terminal, 52... negative current collector foil, 52... negative current collector foil, 53... positive electrode layer, and 54... negative electrode layer.

## Claims

1. A solid electrolyte sheet comprising;
a plate-shaped base containing a solid electrolyte, and
a plate-shaped reinforcing portion formed integrally with the outside of the base,
wherein the reinforcing portion is a composite member formed by combining two electrically insulating members made of different materials that are formed separately from the base, and which has greater rigidity than the base.

2. The solid electrolyte sheet according to claim 1,
wherein the outer side of the base portion and the reinforcing portion are overlapped and integrated.

3. The solid electrolyte sheet according to claim 2,
wherein the base is formed in a rectangular shape, the reinforcing part is formed in a frame shape corresponding to four sides of the base, and a peripheral shape of the reinforcing part is rectangular.

4. The solid electrolyte sheet according to claim 3,
wherein the reinforcing part contains a solid electrolyte.

5. The solid electrolyte sheet according to claim 3,
wherein the reinforcing portion is made of a material having an ionic conductivity of 1 x 10⁻⁴ S/cm or less, or a material that does not have lithium ion conductivity.

6. The solid electrolyte sheet according to claim 4,
wherein the composite member includes a first electrical insulating member and a second electrical insulating member,
the first electrical insulating member is made of a powdery electrical insulator, and
the second electrical insulating member is made of an electrical insulator having a gap that holds the first electrical insulating member.

7. The solid electrolyte sheet according to claim 6,
wherein the powdery inorganic material, which is the first electrical insulating member, is the solid electrolyte or aluminum oxide.

8. The solid electrolyte sheet according to claim 3,
wherein external shapes of the solid electrolyte base sheet forming the base and the reinforcement sheet forming the reinforcing part are rectangular, and an inside of the reinforcing sheet is cut out in a rectangular shape to expose the base in a state where the solid electrolyte base sheet and the reinforcement sheet are superimposed.

9. The solid electrolyte sheet according to any one of claims 3 to 8,
wherein in the reinforcing part, an auxiliary reinforcing part formed in an elongated shape connecting opposite sides of the reinforcing part formed in a rectangular frame shape is formed in the reinforcing part.

10. The solid electrolyte sheet according to any one of claims 3 to 8,
wherein the reinforcing part is formed with a lattice-shaped auxiliary reinforcing part formed in an elongated shape connecting sides opposite to each other, of the reinforcing part formed in the rectangular frame-shape and sides opposite to each other, of the other reinforcing part.

11. The solid electrolyte sheet according to any one of claims 3 to 8,
wherein the reinforcing part is formed with an auxiliary reinforcing part formed in an elongated shape along a diagonal line of the reinforcing part formed in a rectangular frame shape.

12. A solid electrolyte secondary battery comprising:
the solid electrolyte sheet according to any one of claims 1 to 11;
a positive electrode layer provided on one side of the solid electrolyte sheet; and
a negative electrode layer provided on the other surface of the solid electrolyte sheet.

13. The solid electrolyte secondary battery according to claim 12,
wherein a positive current collector foil is provided on a surface of the positive electrode layer on the opposite side to the solid electrolyte sheet,
a negative current collector foil is provided on a surface of the negative electrode layer on the opposite side to the solid electrolyte sheet,
an end surface of the positive electrode layer on the opposite side to the positive terminal of the positive current collector foil protrudes from an end surface of the base of the solid electrolyte sheet and reaches the reinforcing part, and
an end surface of the negative electrode layer on the opposite side to the negative terminal of the negative current collector foil protrudes from the end surface of the base of the solid electrolyte sheet and reaches the reinforcing part.

14. The solid electrolyte secondary battery according to claim 13,
wherein the end face of the positive electrode layer on the positive terminal side of the positive current collector foil protrudes from the end face of the base of the solid electrolyte sheet to reach the reinforcing portion;
the end face of the negative electrode layer on the negative terminal side of the negative current collector foil protrudes from the end face of the base of the solid electrolyte sheet to reach the reinforcing portion.

15. The solid electrolyte secondary battery according to claim 14,
wherein the end surface of the negative electrode layer on the opposite side to the negative terminal of the negative current collector foil protrudes further from the end surface of the base of the solid electrolyte sheet against the end surface of the positive electrode layer on the opposite side to the positive terminal of the positive current collector foil, and reaches the reinforcing part.
